# EUROPEAN PATENT APPLICATION

(11) **EP 4 354 758 A1**
(43) Date of publication of application: **17.04.2024**
(21) Application number: 22209049.0
(22) Date of filing: 23.11.2022
(51) Int. Cl.: H04B 7/185

(54) **USER TERMINAL AND METHOD FOR SWITCHING ROUTING IN LOW-EARTH ORBIT SATELLITE NETWORK**

(30) Priority: 14.10.2022 TW 111139041
(71) Applicant: Industrial Technology Research Institute, Chutung, Hsinchu 310401 (TW)
(72) Inventor: Lin, An-Dee, Taichung 407018 (TW); Tsai, Hua-Lung, Taipei 104 (TW); Chou, Ching-Chun, Taipei 114 (TW)
(74) Representative: Kurig, Thomas

(57) **Abstract**

A method for switching routing in a low-earth-orbit satellite network, being adapted to a user terminal (UT) (10, UT1), includes the following. Routing information (300) is generated by the UT. The routing information (300) is installed into a first routing table of a first satellite (LEO1). The routing information (300) is installed into a second routing table of a second satellite (LEO2) by the UT. The routing information (300) of the first routing table is updated to relay information (400) by the UT. The relay information (400) corresponds to the second satellite (LEO2). Handover from the first satellite (LEO1) to the second satellite (LEO2) is performed by the UT.

## Description

### BACKGROUND

### Technical Field

The invention relates to a communication technology. In particular, the invention relates to a method for switching routing in a low-earth-orbit satellite network and a user terminal.

### Description of Related Art

With the development of communication technology, a satellite network plays an increasingly important role in the next generation mobile communication network. A satellite network architecture includes a data plane, a control plane, and a management plane. The data plane includes a low-earth-orbit (LEO) satellite node and a user terminal (UT) accessing the LEO satellite node. The control plane includes a geostationary-earth-orbit (GEO) satellite node and is capable of covering the Earth, realizing centralized management and control over the data plane. The control plane sends status information of the satellite network to the management plane to obtain structural information of a satellite global network.

In the next generation mobile communication network, control plane and data plane separation, software-defined network (SDN), and network function virtualization (NFV) have become a paradigm for the communication network architecture and is expected to be transferred to the LEO satellite network in the future. In an SDN-based multi-layer satellite network architecture, a contact time of a LEO satellite with the user terminal is merely a few minutes. Due to such a short contact time, the user terminal may frequently perform handover between several LEO satellites, for a number of times that is more than the number of ground-based mobile networks. Accordingly, the control plane, or referred to as a network management center, needs to frequently send control signaling to maintain, for example, routing and quality of service parameters, for the data plane of the user terminal.

Moreover, delay in communication of the LEO satellite to the control plane is greater than delay in direct connection of a ground base station in the mobile network to a core network through optical fiber. In particular, the LEO satellite generally needs multiple times of inter-satellite link (ISL) transmission before reaching the control plane. As a result, the user terminal spend additional time waiting for the exchange of handover control signaling before actually performing handover to the next LEO satellite. Consumption of such additional time seriously affects service continuity of the user terminal and diminish the user experience.

### SUMMARY

In view of this, the invention provides a method for switching routing in a low-earth-orbit satellite network and a user terminal, in which routing information may be pushed to the satellite by the user terminal and handover may be initiated by the user terminal, to maintain service continuity of the user terminal.

An embodiment of the invention provides a method for switching routing in a low-earth-orbit satellite network, adapted to a user terminal (UT). The method includes the following. Routing information is generated by the user terminal. The routing information is installed into a first routing table of a first satellite. The routing information is installed into a second routing table of a second satellite by the user terminal. The routing information of the first routing table is updated to relay information by the user terminal. The relay information corresponds to the second satellite. Handover from the first satellite to the second satellite is performed by the user terminal.

An embodiment of the invention provides a user terminal including a transceiver, a storage medium, and a processor coupled to the transceiver and the storage medium. The processor is configured to: generate routing information installed into a first routing table of a first satellite; install the routing information into a second routing table of a second satellite; update the routing information of the first routing table to relay information corresponding to the second satellite; and perform handover from the first satellite to the second satellite.

### BRIEF DESCRIPTION OF THE DRAWINGS

FIG. 1 is a block diagram of a user terminal according to an embodiment of the invention.
FIG. 2 is a flowchart of a method for switching routing in a low-earth-orbit satellite network according to an embodiment of the invention.
FIG. 3 is a schematic diagram of routing information according to an embodiment of the invention.
FIG. 4 is a schematic diagram of relay information according to an embodiment of the invention.
FIG. 5 is a schematic diagram of a user terminal and a first satellite according to an embodiment of the invention.
FIG. 6 is a schematic diagram of a user terminal, a first satellite, and a second satellite during handover preparation according to an embodiment of the invention.
FIG. 7 is a signaling diagram of a user terminal installing routing information into a second satellite according to an embodiment of the invention.
FIG. 8 is a signaling diagram for updating routing information of a first satellite to relay information by a user terminal according to an embodiment of the invention.

### DESCRIPTION OF THE EMBODIMENTS

Some embodiments of the invention accompanied with the drawings will be described in detail below. The same reference numerals in the description below and in the drawings refer to the same or similar elements. These embodiments are only a part of the invention and do not disclose all possible implementations of the invention. More specifically, these embodiments are only examples of the scope of the appended claims of the invention. Wherever possible, elements/members/steps using the same reference numerals in the drawings and embodiments refer to the same or similar parts. Cross-reference may be mutually made to the relevant descriptions of elements/members/steps using the same reference numerals or using the same terms in different embodiments.

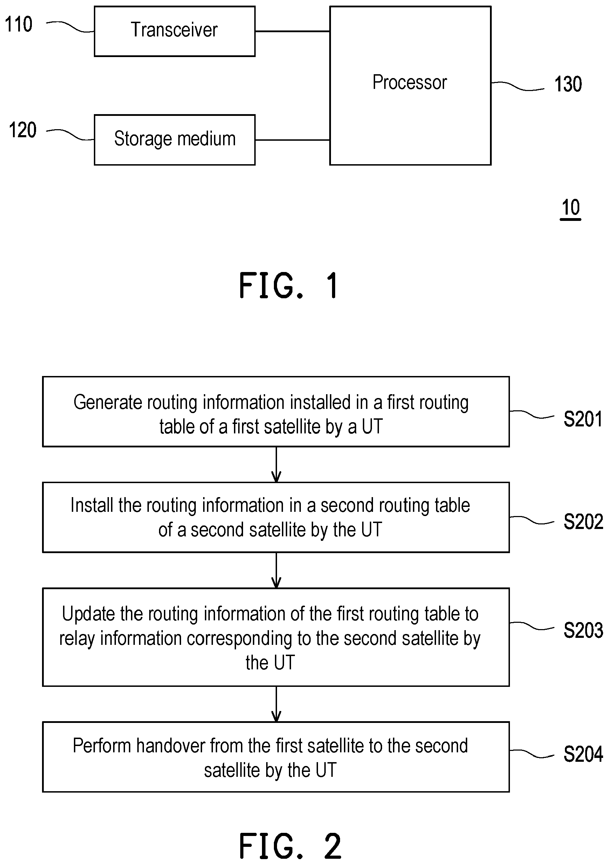

FIG. 1 is a block diagram of a user terminal according to an embodiment of the invention. A user terminal 10 includes a transceiver 110, a storage medium 120, and a processor 130. The processor 130 is coupled to the transceiver 110 and the storage medium 120. The user terminal 10 may wirelessly communicate with a satellite flying in space. In an embodiment, the user terminal 10 may be user equipment (UE), for example. The term "user equipment" of embodiments of the invention may refer to various embodiments, which may include, for example, a mobile station, an advanced mobile station, a server, a client end, a desktop computer, a notebook computer, a network computer, a workstation, a personal digital assistant, a personal computer, a tablet computer, a scanner, a telephone device, a calling device, a camera, a television, a handheld game console, a music device, a wireless sensor, or the like. In some applications, the user terminal 10 may be a stationary computer device operating in a mobile environment such as a bus, a train, an airplane, a ship, an automobile, or the like. In some embodiments, the user terminal 10 may be a base station in a communication system. The term "base station" (BS) of embodiments of the invention may be, for example, synonymous with a variation or a sub-variation of "gNodeB" (gNB), "eNodeB" (eNB), a node B, an advanced BS (ABS), a transmission reception point (TRP), an unlicensed TRP, a base transceiver system (BTS), an access point, a home BS, a relay station, a scatterer, a repeater, an intermediate node, an intermediary, a satellite-based communication BS, and so on.

The transceiver 110 wirelessly transmits downlink signals and receives uplink signals. The transceiver 110 may be configured to transmit and receive signals at radio frequencies or at millimeter wave frequencies. The transceiver 110 may also perform operations such as low noise amplification, impedance matching, frequency mixing, frequency up-conversion or downconversion, filtering, amplification, and the like. The transceiver 110 may include one or more analog-to-digital (A/D) converters and digital-to-analog (D/A) converters that are configured for conversion from an analog signal format to a digital signal format during uplink signal processing, and conversion from a digital signal format to an analog signal format during downlink signal processing. The transceiver 110 may further include an antenna array that may include one or more antennas for transmitting and receiving omnidirectional antenna beams or directional antenna beams.

The storage medium 120 may store a computer program. In an embodiment, the storage medium 120 is any type of fixed or removable random access memory (RAM), read-only memory (ROM), flash memory, a hard disk drive (HDD), a solid state drive (SSD), or similar elements or a combination thereof. The storage medium 120 is configured to store a plurality of modules, computer programs, or various applications executable by the processor 130.

The processor 130 is in charge of the whole or part of the operation of the user terminal 10. In an embodiment, the processor 130 is a central processing unit (CPU), or any other programmable general-purpose or special-purpose micro control unit (MCU), microprocessor, digital signal processor (DSP), programmable controller, application specific integrated circuit (ASIC), graphics processing unit (GPU), image signal processor (ISP), image processing unit (IPU), arithmetic logic unit (ALU), complex programmable logic device (CPLD), field programmable gate array (FPGA), or other similar elements or a combination thereof.

FIG. 2 is a flowchart of a method for switching routing in a low-earth-orbit satellite network according to an embodiment of the invention. The method shown in FIG. 2 is applicable to the user terminal 10. In step S201, routing information is generated by the user terminal 10. The routing information is installed into a first routing table of a first satellite. In step S202, the routing information is installed into a second routing table of a second satellite by the user terminal 10. In step S203, the routing information of the first routing table is updated to relay information by the user terminal 10. The relay information corresponds to the second satellite. In step S204, handover from the first satellite to the second satellite is performed by the user terminal 10.

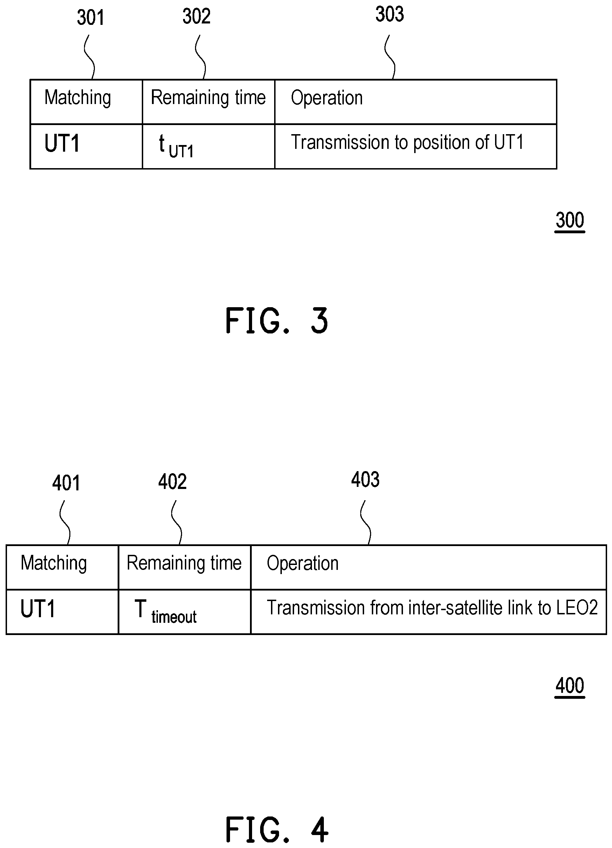

FIG. 3 is a schematic diagram of routing information according to an embodiment of the invention. In an embodiment, the data format of routing information 300 may include fields of matching 301, remaining time 302, and operation 303. Specifically, the user terminal 10 may install the routing information 300 into a routing table of a satellite. Upon receipt of a packet, the satellite determines the routing operation of the packet according to the content of the routing information 300.

In an embodiment, the content of the field of matching 301 of the routing information 300 is "UT1", which indicates the routing rule of the packet matching the user terminal "UT1". In an embodiment, the field of matching 301 may include an identification of the user terminal 10. The identification may be a device identification code of the user terminal 10 or an identification code of the user terminal 10 logging into a satellite network.

In an embodiment, the content of the field of remaining time 302 of the routing information 300 is *"t*_{*UT*1}*",* and this setting value represents a contact time of the user terminal "UT1" with the satellite. In the routing table of the satellite, the contact time *t*_{*UT*1} as set in the field of remaining time 302 of the routing information 300 is counted down until the contact time *t*_{*UT*1} is reset to zero. The satellite maintains the routing rule of the routing information 300 until the contact time *t*_{*UT*1} is reset to zero. In an embodiment, the contact time *t*_{*UT*1} may be determined according to a flight trajectory model of the satellite and a position of the user terminal "UT1".

In an embodiment, the content of the field of operation 303 of the routing information 300 is "transmission to position of UT1", which indicates that the satellite is to transmit the data of the packet to the position of the user terminal "UT1". In an embodiment, the position may be a Global Positioning System (GPS) position of the user terminal "UT1". In an embodiment, the field of operation 303 may also be set to a beam pointing to the GPS position of the user terminal "UT1".

FIG. 4 is a schematic diagram of relay information according to an embodiment of the invention. In an embodiment, the data format of relay information 400 may include fields of matching 401, remaining time 402, and operation 403. Specifically, the user terminal 10 may update the routing information 300 stored in the routing table of the satellite to the relay information 400. Upon receipt of a packet, the satellite determines the routing operation of the packet according to the content of the relay information 400.

In an embodiment, the content of the field of matching 401 of the relay information 400 is "UT1", which indicates the routing rule of the packet matching the user terminal "UT1". In an embodiment, the field of matching 401 may include the identification of the user terminal 10. The identification may be a device identification code of the user terminal 10 or an identification code of the user terminal 10 logging into a satellite network.

In an embodiment, the content of the field of remaining time 402 of the relay information 400 is *"Tₜᵢₘₑₒᵤₜ",* and this setting value represents a waiting time of retaining the relay information 400 in the routing table of the satellite during handover performed by the user terminal "UT1" between the satellites. In the routing table of the satellite, the waiting time *Tₜᵢₘₑₒᵤₜ* as set in the field of remaining time 402 of the relay information 400 is counted down until the waiting time *Tₜᵢₘₑₒᵤₜ* is reset to zero. In an embodiment, routing corresponding to the relay information 400 is triggered during the waiting time *Tₜᵢₘₑₒᵤₜ,* and the waiting time *Tₜᵢₘₑₒᵤₜ* is re-counted. In an embodiment, routing corresponding to the relay information 400 is not triggered during the waiting time *Tₜᵢₘₑₒᵤₜ,* and the relay information 400 is removed from the routing table.

In an embodiment, the content of the field of operation 403 of the relay information 400 is "transmission from inter-satellite link to LEO2", which indicates that the satellite is to transmit the data of the packet from the inter-satellite link to a satellite "LEO2". Accordingly, before handover is completed by the user terminal 10, the data of the packet may be relayed from the current satellite to the next satellite, which prevents the user terminal 10 from losing the packet during handover.

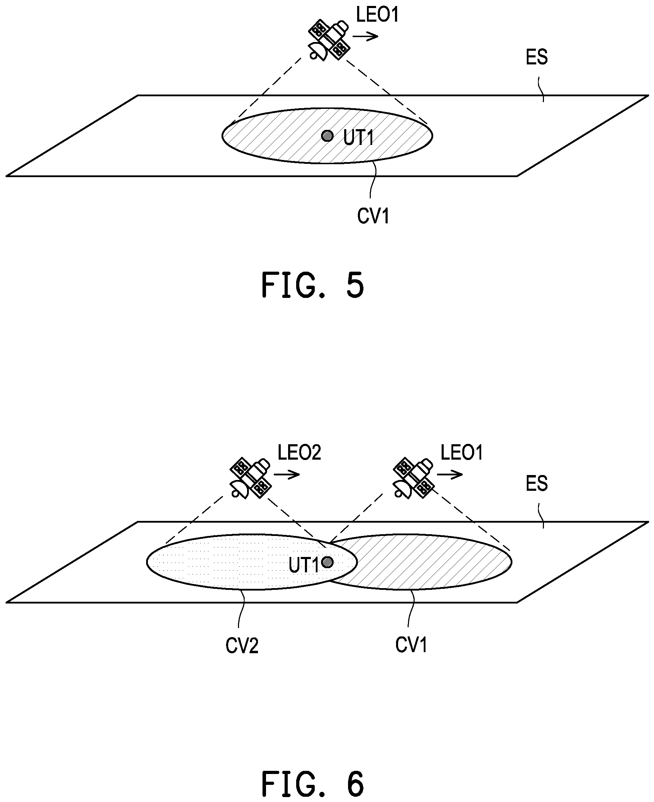

FIG. 5 is a schematic diagram of a user terminal and a first satellite according to an embodiment of the invention. The user terminal UT1 is located on the Earth's surface ES. A satellite LEO1 has a signal coverage CV1 on the Earth's surface ES. The user terminal UT1 is within the signal coverage CV1 of the satellite LEO1. In an embodiment, after the user terminal UT1 is powered on and detects the satellite LEO1, the user terminal UT1 evaluates the contact time *t*_{*UT*1} of the satellite LEO1 with the next satellite following the satellite LEO1. In an embodiment, the user terminal UT1 determines the contact time *t*_{*UT*1} according to a flight trajectory model of the satellite LEO1 and the position of the user terminal UT1. In an embodiment, the user terminal UT1 determines the next satellite following the satellite LEO1 according to the two-line element (TLE) associated with the satellite LEO1. In an embodiment, the user terminal UT1 generates routing information as in Table 1 below, and installs the routing information into a routing table of the satellite LEO1.

**Table 1**

| Matching | Remaining time | Operation |
|---|---|---|
| UT1 | *t*_{*UT*1} | Transmission to position of UT1 |

FIG. 6 is a schematic diagram of a user terminal, a first satellite, and a second satellite during handover preparation according to an embodiment of the invention. The user terminal UT1 is located on the Earth's surface ES. The satellite LEO1 has the signal coverage CV1 on the Earth's surface ES. A satellite LEO2 has a signal coverage CV2 on the Earth's surface ES. The user terminal UT1 is within the signal coverage CV1 of the satellite LEO1, and the user terminal UT1 is within the signal coverage CV2 of the satellite LEO2. In an embodiment, when the contact time *t*_{*UT*1} is reset to zero, the user terminal UT1 prepares for handover to the satellite LEO2. At this time, the user terminal UT1 determines a new contact time *t'*_{*UT*1} according to the satellite LEO2. In an embodiment, the user terminal UT1 evaluates the new contact time *t'*_{*UT*1} of the satellite LEO2 and the next satellite following the satellite LEO2. In an embodiment, the user terminal UT1 determines the new contact time *t'*_{*UT*1} according to a flight trajectory model of the satellite LEO2 and the position of the user terminal UT1. In an embodiment, the user terminal UT1 determines the next satellite following the satellite LEO2 according to the two-line element (TLE) associated with the satellite LEO2. In an embodiment, the user terminal UT1 updates routing information as in Table 2 below, and installs the updated routing information into a routing table of the satellite LEO2.

**Table 2**

| Matching | Remaining time | Operation |
|---|---|---|
| UT1 | *t'*_{*UT*1} | Transmission to position of UT1 |

It should be noted that during preparation for handover from the satellite LEO1 to the satellite LEO2 by the user terminal UT1, the packet data of the user terminal UT1 may still be transmitted to the data network through the satellite LEO1. Specifically, before handover from the satellite LEO1 to the satellite LEO2 is completed by the user terminal UT1, some on-the-fly packet data that have been sent by the user terminal UT1 are still transmitted to the satellite LEO1. At this time, it is necessary to modify the routing table of the satellite LEO1 to relay the packet data to the satellite LEO2. In an embodiment, the user terminal UT1 generates relay information as in Table 3 below, and updates the routing information of the routing table of the satellite LEO1 to the relay information that corresponds to the satellite LEO2.

**Table 3**

| Matching | Remaining Time | Action |
|---|---|---|
| UT1 | *Tₜᵢₘₑₒᵤₜ* | Transmission from inter-satellite link to LEO2 |

In an embodiment, the waiting time *Tₜᵢₘₑₒᵤₜ* is re-counted in response to routing corresponding to the relay information being triggered during the waiting time *Tₜᵢₘₑₒᵤₜ.* In an embodiment, the relay information is removed from the routing table of the satellite LEO1 in response to routing corresponding to the relay information not being triggered during the waiting time *Tₜᵢₘₑₒᵤₜ*.

In an embodiment, after the routing of the satellite LEO1 and the satellite LEO2 is set up, the user terminal UT1 performs handover from the satellite LEO1 to the satellite LEO2.

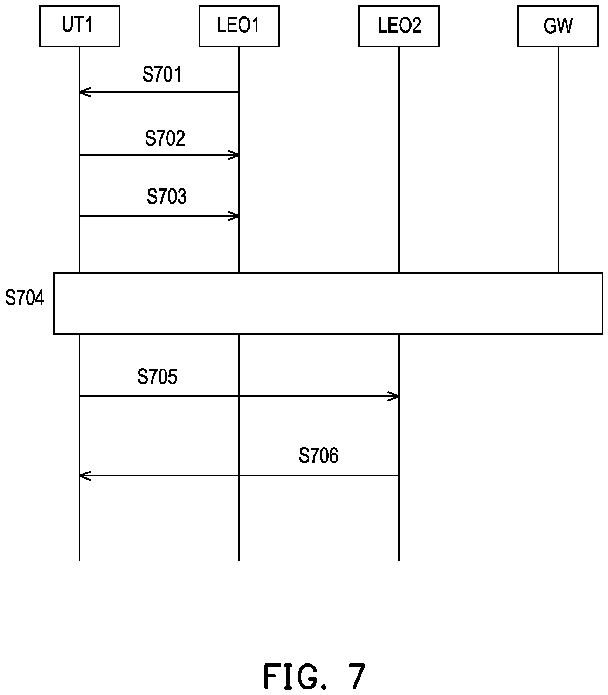

FIG. 7 is a signaling diagram of a user terminal installing routing information into a second satellite according to an embodiment of the invention. In step S701, the user terminal UT1 receives a message broadcast from the satellite LEO1. In step S702, the user terminal UT1 logs into the satellite LEO1 and receives an ACK packet from the satellite LEO1. In step S703, the user terminal UT1 installs routing information into the routing table of the satellite LEO1. The content of the routing information is as in Table 1 above. In step S704, since the user terminal UT1 has set up the routing through the satellite LEO1, at this time, the user terminal UT1 may access a data network behind a gateway (GW) and connect to the Internet via a default route existing in the satellite LEO1 to the gateway GW. In step S705, when the contact time *t*_{*UT*1} is reset to zero, the user terminal UT1 prepares for handover to the satellite LEO2. The user terminal UT1 evaluates the new contact time *t'*_{*UT*1} of the satellite LEO2 and the next satellite following the satellite LEO2. The user terminal UT1 updates the routing information as in Table 2 above, and installs the updated routing information into the routing table of the satellite LEO2. In step S706, the user terminal UT1 receives an ACK packet from the satellite LEO2.

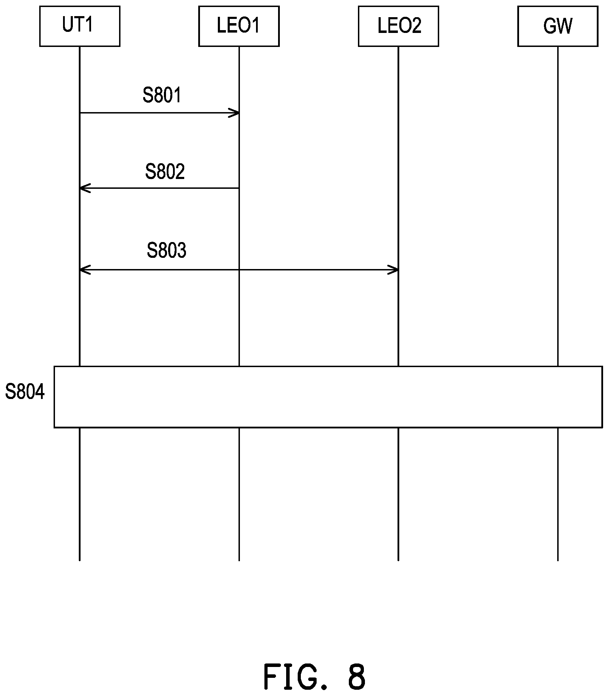

FIG. 8 is a signaling diagram for updating routing information of a first satellite to relay information by a user terminal according to an embodiment of the invention. In step S801, the user terminal UT1 updates the routing information of the routing table of the satellite LEO1 to the relay information that corresponds to the satellite LEO2 as in Table 3 above. In step S802, the user terminal UT1 receives an ACK packet from the satellite LEO1. In step S803, the user terminal UT1 performs handover from the satellite LEO1 to the satellite LEO2. Specifically, the user terminal UT1 logs into the satellite LEO2 and receives an ACK packet from the satellite LEO2. In step S804, since the user terminal UT1 has set up the routing through the satellite LEO2, at this time, the user terminal UT1 may access a data network behind a gateway GW and connect to the Internet via a default route existing in the satellite LEO2 to the gateway GW.

In summary of the foregoing, embodiments of the invention may provide a user terminal-based distributed control plane architecture. The user terminal may push the routing information of the user terminal to the satellite currently in service, or to the satellite to which handover is to be performed, and initiate handover by the user terminal when the contact time runs out. Accordingly, in the case of frequent handover by the user terminal between several satellites, the service continuity of the user terminal can be maintained, accordingly improving the user experience.

## Claims

1. A method for switching routing in a low-earth-orbit satellite network, being adapted to a user terminal (10, UT1), the method comprising:
generating, by the user terminal (10, UT1), routing information (300) installed into a first routing table of a first satellite (LEO1);
installing, by the user terminal (10, UT1), the routing information (300) into a second routing table of a second satellite (LEO2);
updating, by the user terminal (10, UT1), the routing information (300) of the first routing table to relay information (400) corresponding to the second satellite (LEO2); and
performing, by the user terminal (10, UT1), handover from the first satellite (LEO1) to the second satellite (LEO2).

2. The method of claim 1, wherein the routing information (300) comprises an identification of the user terminal (10, UT1).

3. The method of claim 1 or 2, wherein the routing information (300) comprises a position of the user terminal (10, UT1).

4. The method of any one of claims 1 to 3, wherein the routing information (300) comprises a first contact time (*t_{UT1}*)*.*

5. The method of claim 4, wherein the first contact time (*t_{UT1}*) is determined according to a flight trajectory model of the first satellite (LEO1) and a position of the user terminal (10, UT1).

6. The method of claim 4, further comprising:
determining a second contact time (*t'_{UT1}*) in response to the first contact time (*t_{UT1}*) being reset to zero; and
updating the routing information (300) according to the second contact time (*t'_{UT1}*)*.*

7. The method of claim 6, wherein the second contact time (*t'_{UT1}*) is determined according to a flight trajectory model of the second satellite (LEO2) and a position of the user terminal (10, UT1).

8. The method of any one of claims 1 to 7, wherein the relay information (400) comprises a waiting time (*Tₜᵢₘₑₒᵤₜ*)*.*

9. The method of claim 8, further comprising:
re-counting the waiting time (*Tₜᵢₘₑₒᵤₜ*) in response to routing corresponding to the relay information (400) being triggered during the waiting time (*Tₜᵢₘₑₒᵤₜ*)*.*

10. The method of claim 8, further comprising:
removing the relay information (400) from the first routing table in response to routing corresponding to the relay information (400) not being triggered during the waiting time (*Tₜᵢₘₑₒᵤₜ*)*.*

11. A user terminal (10, UT1), comprising:
a transceiver (110);
a storage medium (120); and
a processor (130) coupled to the transceiver (110) and the storage medium (120), the processor (130) being configured to:
generate routing information (300) installed into a first routing table of a first satellite (LEO1);
install the routing information (300) into a second routing table of a second satellite (LEO2);
update the routing information (300) of the first routing table to relay information (400) corresponding to the second satellite (LEO2); and
perform handover from the first satellite (LEO1) to the second satellite (LEO2).

12. The user terminal (10, UT1) of claim 11, wherein the routing information (300) comprises an identification of the user terminal (10, UT1).

13. The user terminal (10, UT1) of claim 11 or 12, wherein the routing information (300) comprises a position of the user terminal (10, UT1).

14. The user terminal (10, UT1) of any one of claims 11 to 13, wherein the routing information (300) comprises a first contact time (*t_{UT1}*)*.*

15. The user terminal (10, UT1) of claim 14, wherein the first contact time (*t_{UT1}*) is determined according to a flight trajectory model of the first satellite (LEO1) and a position of the user terminal (10, UT1).

16. The user terminal (10, UT1) of claim 14, wherein the processor (130) is further configured to:
determine a second contact time (*t'_{UT1}*) in response to the first contact time (*t_{UT1}*) being reset to zero; and
update the routing information (300) according to the second contact time (*t'_{UT1}*)*.*

17. The user terminal (10, UT1) of claim 16, wherein the second contact time (*t'_{UT1}*) is determined according to a flight trajectory model of the second satellite (LEO2) and a position of the user terminal (10, UT1).

18. The user terminal (10, UT1) of any one of claims 11 to 17, wherein the relay information (400) comprises a waiting time (*Tₜᵢₘₑₒᵤₜ*).

19. The user terminal (10, UT1) of claim 18, wherein the processor (130) is further configured to:
re-count the waiting time (*Tₜᵢₘₑₒᵤₜ*) in response to routing corresponding to the relay information (400) being triggered during the waiting time (*Tₜᵢₘₑₒᵤₜ*)*.*

20. The user terminal (10, UT1) of claim 18, wherein the processor (130) is further configured to:
remove the relay information (400) from the first routing table in response to routing corresponding to the relay information (400) not being triggered during the waiting time (*Tₜᵢₘₑₒᵤₜ*)*.*

## Amended claims

### Amended claims in accordance with Rule 137(2) EPC.

1. A method for switching routing in a low-earth-orbit satellite network, being adapted to a user terminal (10, UT1), the method **characterized in** comprising:
generating, by the user terminal (10, UT1), routing information (300) and installing the routing information (300) into a first routing table recorded in a first satellite (LEO1), wherein routing operation of a packet is determined according to the routing information (300) in the first routing table by the first satellite (LEO1), and the routing information (300) comprises a first contact time (*t_{UT1}*) in a field of remaining time of the routing information (300);
installing, by the user terminal (10, UT1), the routing information (300) into a second routing table recorded in a second satellite (LEO2), wherein routing operation of a packet is determined according to the routing information (300) in the second routing table by the second satellite (LEO2), and the routing information (300) comprises a second contact time (*t'_{UT1}*) in a field of remaining time of the routing information (300);
updating, by the user terminal (10, UT1), the first routing table by replacing the routing information (300) of the first routing table with relay information (400) corresponding to the second satellite (LEO2); and
in response to the first contact time (*t_{UT1}*) being counted down to zero, performing, by the user terminal (10, UT1), handover from the first satellite (LEO1) to the second satellite (LEO2), wherein the first contact time (*t_{UT1}*) is configured to be a remaining contact time of the user terminal (10, UT1) with the first satellite (LEO1).

2. The method of claim 1, wherein the routing information (300) comprises an identification of the user terminal (10, UT1).

3. The method of claim 1 or 2, wherein the routing information (300) comprises a position of the user terminal (10, UT1).

4. The method of claim 1, wherein the first contact time (*t_{UT1}*) is determined according to a flight trajectory model of the first satellite (LEO1) and a position of the user terminal (10, UT1).

5. The method of claim 1, further comprising:
determining the second contact time (*t'_{UT1}*) in response to the first contact time (*t_{UT1}*) being counted down to zero, wherein the second contact time (*t'_{UT1}*) is configured to be a remaining contact time of the user terminal (10, UT1) with the second satellite (LEO2); and
updating the routing information (300) according to the second contact time (*t'_{UT1}*).

6. The method of claim 5, wherein the second contact time (*t'_{UT1}*) is determined according to a flight trajectory model of the second satellite (LEO2) and a position of the user terminal (10, UT1).

7. The method of any one of claims 1 to 6, wherein the relay information (400) comprises a waiting time (*Tₜᵢₘₑₒᵤₜ*), and the waiting time (*Tₜᵢₘₑₒᵤₜ*) is configured to be a time of retaining the relay information (400) in the first routing table of the first satellite.

8. The method of claim 7, further comprising:
resetting the waiting time (*Tₜᵢₘₑₒᵤₜ*) to its original in response to routing corresponding to the relay information (400) being triggered during the waiting time (*Tₜᵢₘₑₒᵤₜ*)*.*

9. The method of claim 7, further comprising:
removing the relay information (400) from the first routing table in response to routing corresponding to the relay information (400) not being triggered during the waiting time (*Tₜᵢₘₑₒᵤₜ*).

10. A user terminal (10, UT1), comprising:
a transceiver (110);
a storage medium (120); and
a processor (130) coupled to the transceiver (110) and the storage medium (120), the user terminal (10, UT1) being **characterized in that** the processor (130) is configured to::
generate routing information (300) and install the routing information (300) into a first routing table recorded in a first satellite (LEO1), wherein routing operation of a packet is determined according to the routing information (300) in the first routing table by the first satellite (LEO1), and the routing information (300) comprises a first contact time (*t_{UT1}*) in a field of remaining time of the routing information (300);
install the routing information (300) into a second routing table recorded in a second satellite (LEO2), wherein routing operation of a packet is determined according to the routing information (300) in the second routing table by the second satellite (LEO2), and the routing information (300) comprises a second contact time (*t'_{UT1}*) in a field of remaining time of the routing information (300);
update the first routing table by replacing the routing information (300) of the first routing table with relay information (400) corresponding to the second satellite (LEO2); and
in response to the first contact time (*t_{UT1}*) being counted down to zero, perform handover from the first satellite (LEO1) to the second satellite (LEO2), wherein the first contact time (*t_{UT1}*) is configured to be a remaining contact time of the user terminal (10, UT1) with the first satellite (LEO1).

11. The user terminal (10, UT1) of claim 10, wherein the routing information (300) comprises an identification of the user terminal (10, UT1).

12. The user terminal (10, UT1) of claim 10 or 11, wherein the routing information (300) comprises a position of the user terminal (10, UT1).

13. The user terminal (10, UT 1) of claim 10, wherein the first contact time (*t_{UT1}*) is determined according to a flight trajectory model of the first satellite (LEO1) and a position of the user terminal (10, UT1).

14. The user terminal (10, UT 1) of claim 10, wherein the processor (130) is further configured to:
determine the second contact time (*t'_{UT1}*) in response to the first contact time (*t_{UT1}*) being counted down to zero, wherein the second contact time (*t'_{UT1}*) is configured to be a remaining contact time of the user terminal (10, UT1) with the second satellite (LEO2); and
update the routing information (300) according to the second contact time (*t'_{UT1}*)*.*

15. The user terminal (10, UT1) of claim 14, wherein the second contact time (*t'_{UT1}*) is determined according to a flight trajectory model of the second satellite (LEO2) and a position of the user terminal (10, UT1).

16. The user terminal (10, UT1) of any one of claims 10 to 15, wherein the relay information (400) comprises a waiting time (*Tₜᵢₘₑₒᵤₜ*), and the waiting time (*Tₜᵢₘₑₒᵤₜ*) is configured to be a time of retaining the relay information (400) in the first routing table of the first satellite.

17. The user terminal (10, UT1) of claim 16, wherein the processor (130) is further configured to:
reset the waiting time (*Tₜᵢₘₑₒᵤₜ*) to its original in response to routing corresponding to the relay information (400) being triggered during the waiting time (*Tₜᵢₘₑₒᵤₜ*).

18. The user terminal (10, UT1) of claim 16, wherein the processor (130) is further configured to:
remove the relay information (400) from the first routing table in response to routing corresponding to the relay information (400) not being triggered during the waiting time (*Tₜᵢₘₑₒᵤₜ*).
